# EUROPÄISCHE PATENTSCHRIFT

(11) **EP 1 181 728 B1**
(45) Veröffentlichungstag und Bekanntmachung des Hinweises auf die Patenterteilung: **14.05.2003**
(21) Anmeldenummer: 00926667.7
(22) Anmeldetag: 07.03.2000
(51) Int. Cl.: H01M 8/02, C25B 9/00

(54) **BAUTEIL WIE ZELLRAHMEN UND/ODER POLPLATTE FÜR EINE PEM-BRENNSTOFFZELLE MIT REDUZIERTEM ÜBERGANGSWIDERSTAND UND VERFAHREN ZUR REDUZIERUNG DES ÜBERGANGSWIDERSTANDS**
COMPONENT SUCH AS A CELL FRAME AND/OR POLE PLATE FOR A PEM FUEL CELL, WITH REDUCED CONTACT RESISTANCE AND METHOD FOR REDUCING THE CONTACT RESISTANCE THEREOF
COMPOSANT TELS QUE CHASSIS ET/OU PLAQUE POLAIRE POUR PILE A COMBUSTIBLE DE TYPE PEM, A RESISTANCE DE CONTACT REDUITE, ET PROCEDE PERMETTANT DE DIMINUER LADITE RESISTANCE

(30) Priorität: 29.03.1999 DE 19914250
(43) Veröffentlichungstag der Anmeldung: 27.02.2002
(73) Patentinhaber: SIEMENS AKTIENGESELLSCHAFT, 80333 München (DE); W.C. Heraeus GmbH & Co. KG, 63450 Hanau (DE)
(72) Erfinder: HORNUNG, Regina, D-91052 Erlangen (DE); WAIDHAS, Manfred, D-90427 Nürnberg (DE); FÖRDERER, Heinz, D-63538 Grosskrotzenburg (DE); JESCHONNEK, Bernd, D-63526 Erlensee (DE)
(74) Vertreter: Berg, Peter, Dipl.-Ing.
(86) Internationale Anmeldenummer: DE0000717
(87) Internationale Veröffentlichungsnummer: WO00059055

(56) Entgegenhaltungen:
- EP-A- 0 423 448
- EP-A- 0 446 680
- DE-A- 19 925 505
- US-A- 5 549 808
- HORNUNG R ET AL: "Bipolar plate materials development using Fe-based alloys for solid polymer fuel cells" JOURNAL OF POWER SOURCES,CH,ELSEVIER SEQUOIA S.A. LAUSANNE, Bd. 72, Nr. 1, 30. März 1998 (1998-03-30), Seiten 20-21, XP004131582 ISSN: 0378-7753

## Beschreibung

Die Erfindung bezieht sich auf eine Brennstoffzelle mit wenigstens einem Bauteil wie ein Zellrahmen und/oder eine Polplatte mit beschichteter Oberfläche und mit reduziertem Übergangswiderstand. Daneben bezieht sich die Erfindung auf ein Verfahren zur Reduzierung des Übergangswiderstands.

Aus der DE 44 42 285 C1 und der DE 197 0119 sind Zellrahmen und Polplatten speziell für PEM-Brennstoffzellen aus korrosionsbeständigen Materialien bekannt. Dabei handelt es sich um Werkstoffe auf Fe-Basis, die fertigungstechnische Vorteile bringen. Die Korrosionsbeständigkeit dieser Werkstoffe ist auf die Bildung einer Passivierungs-Oxidschicht zurückzuführen, durch die aber der Übergangswiderstand zwischen dem Stromkollektor und der Polplatte drastisch erhöht wird, so daß erhebliche Spannungsverluste auftreten. Zur Reduzierung dieses Übergangswiderstands wird die Polplatte z.B. homogen mit einer Schichtdicke von ≥ 0,5 µm vergoldet oder mit einem anderen Edelmetall beschichtet.

Üblicherweise sind Vergoldungsschichten durchgehend. Normalerweise wird mit einer Schichtdicke von bis zu 0,5 µm beschichtet. Dieser relativ dicken Edelmetallauflage entsprechend sind auch die Kosten für diese Oberflächenbeschichtung sehr hoch. Aus der DE 69 125 425 T2 ist eine Dünnschichtvergoldung für Supraleiter bekannt, bei der eine homogene Edelmetall-Schutzschicht zwischen zwei supraleitende Schichten aufgebracht ist.

Die Anforderungen an letztere Schutzschicht sind jedoch andere als die an eine elektrisch leitende Schicht zur Reduzierung des Übergangswiderstandes. Deshalb hat diese bekannte Schicht ein spezifisches Eigenschaftsprofil, beispielsweise in bezug auf die elektrische Leitfähigkeit und auf den Übergangswiderstand. Es wird dort auch ein anderes Herstellungsverfahren angewendet.

Aus der US 5 549 808 A ist ein Verfahren zum Beschichten von Kontakten bekannt, bei dem auf die Kontakte elektrisch gut leitende Schichten im Mikron- oder Submikron-Bereich aufgebracht werden. Dabei geht es speziell um Kontakte für Halbleiterstrukturen.

Aufgabe der vorliegenden Erfindung ist es demgegenüber, bei einer Brennstoffzelle mit wenigstens einem Bauteil aus korrosionsbeständigem Werkstoff, wie z.B. einer Polplatte und/oder eines Zellrahmens, die Kosten der Edelmetall-Oberflächenbeschichtung des Bauteils zu reduzieren und gleichzeitig den Übergangswiderstand am Bauteil zu minimieren. Außerdem ist es Aufgabe der Erfindung, ein entsprechendes Verfahren zur Reduzierung des Übergangswiderstands anzugeben.

Die Aufgabe ist bei einer Brennstoffzelle der eingangs genannten Art erfindungsgemäß durch die Merkmale des Patentanspruches 1 gelöst. Ein zugehöriges Verfahren ist Gegenstand des Patentanspruches 5. Jeweilige Weiterbildungen sind in den abhängigen Ansprüchen angegeben.

Mit der Erfindung ist eine Brennstoffzelle, insbesondere eine PEM-Brennstoffzelle, geschaffen, bei der auf einem Bauteil aus korrosionsbeständigem Werkstoff, wie eine Polplatte und/oder ein Zellrahmen, eine Edelmetall-Kontaktschicht auf zumindest einer Stelle und/oder Seite vorhanden ist. Dabei beträgt die gemittelte Dicke der Edelmetall-Kontaktschicht wenigstens 0,1 µm. Die Schichtdicke kann weniger als 0,05 µm und gegebenenfalls weniger als 0,3 µm oder auch 0,2 µm betragen. Insbesondere kann die Schichtdicke im Bereich zwischen 1 und 10 nm (0,01 µm), d.h. also im Nano-Bereich liegen.

Außerdem ist Gegenstand der Erfindung ein Verfahren zur Reduzierung des Übergangswiderstands eines Bauteils durch Beschichtung mit Edelmetall, wobei die Edelmetallschicht mit einer Schichtdicke von maximal 0,1 µm aufgetragen wird.

Mit dem erfindungsgemäßen Verfahren wird eine Reduzierung des Übergangswiderstands des Brennstoffzelienbauteils durch BeSchichtung mit Edelmetall erreicht, wobei die Edelmetallschicht mit einer Schichtdicke von maximal 0,1 µm aufgetragen wird.

Unter "Beschichtung" wird im vorliegenden Zusammenhang bevorzugt nicht eine durchgehende, homogene, zusammenhängende dichte ("pinhole-freie") und/oder flächendeckende Beschichtung bezeichnet, sondern eine Beschichtung des Bauteils, die zumindest diskrete und flächige Inseln und/oder Pfade der entsprechenden Edelmetallatome umfaßt.

Die diskreten Inseln und/oder Pfade der Beschichtung werden als Leitungsinseln und/oder Leitungspfade bezeichnet, weil sie, im Gegensatz zu der sie umgebenden normalen Oberfläche des Bauteils, die in der Regel mit einer Passivierungsoxidschicht behaftet ist, Bereiche des Bauteils mit geringem Widerstand sind.

Die minimale Leitungsinsel- und/oder Leitungspfaddichte und/oder die minimale Belegung mit Edelmetallatomen ist bei der Beschichtung die, bei der eine ausreichende Anzahl von Leitfähigkeitspfaden die vorhandene Passiv-/Oxidschicht des beschichteten Bauteils durchsetzt, so daß der makroskopische Übergangswiderstand unter 20mΩcm² fällt.

Mit "gemittelter Dicke der Edelmetall-Kontaktschicht" und/oder "Schichtdicke" wird eine theoretische Höhe bezeichnet, die sich ergibt, wenn eine homogene Verteilung der unter Umständen diskret vorliegenden Leitungspfade angenommen wird. Beispielsweise ergibt diese Rechnung bei einer durchschnittlichen Höhe der Leitungspfade von 0,17µm und bei einer 30%tigen Belegung der eine "gemittelte Dicke der Edelmetall-Kontaktschicht" von 0,051µm.

Weitere Beispiele für die Berechnung der gemittelten Dicke sind:
Durchschnitt der Höhe der Leitungspfade: 0,17µm;
Belegung 18%: Gemittelte Dicke: 0,03µm;
50%: 0,09µm
10%: 0,017µm
Durchschnitt der Belegung: 20%
Höhe der Leitungspfade: 0,15µm: Gemittelte Dicke: 0,03µm
0,10µm: 0,02µm
0,20µm 0,04µm

Die Schichtdicke, die nach dem Verfahren aufgetragen wird, beträgt bevorzugt kleiner/gleich 0,1µm, bevorzugt kleiner/gleich 0,05µm und insbesondere bevorzugt kleiner/gleich 0,03µm. Schichtdicken unter 0,02µm werden auch realisiert. Bei einer Ausführung wurde eine Schichtdicke von 0,015µm erreicht.

Nach einer Ausgestaltung des Verfahrens wird die Edelmetallbeschichtung durch eine einmalige Kontaktierung der Polplatte und/oder des Zellrahmens elektrochemisch aufgebracht. Die Oberfläche des zu beschichtenden Bauteils wird dabei mit dem Edelmetall sozusagen aktiviert, so daß der Übergangswiderstand des Bauteils zu einem anderen Kontaktelement klein wird, bzw. im Idealfall gegen Null geht.

Nach einer Ausgestaltung der Erfindung ist die Edelmetallbeschichtung des Bauteils, der Polplatte und/oder des Zellrahmens nicht flächendeckend, so daß die Edelmetallbeschichtung diskrete Leitungspfade und/oder -inseln umfaßt.

Nach einer anderen Ausgestaltung des Bauteils besteht die Kontaktschicht aus einer zusammenhängenden Schicht aus Edelmetall, z.B. einer Goldschicht im Nano-Bereich (beispielsweise 1 bis 10nm).

Nach einer weiteren Ausgestaltung der Erfindung sind nicht alle Seiten des Bauteils mit Edelmetall beschichtet, so daß z.B. nur an der Seite, wo ein Stromübergang vom Stromkollektor zur Polplatte stattfindet, eine Edelmetallbeschichtung aufgetragen ist. Ebenso kann auch nur ein bestimmter Bereich einer oder mehrerer Seiten des Bauteils beschichtet sein.

Als Edelmetalle werden bevorzugt Gold, Silber, Palladium, Kupfer, Rhodium, Iridium und Platin sowie beliebige Legierungen und Mischungen dieser Metalle eingesetzt.

Das Verfahren ermöglicht durch eine geeignete Voraktivierung und darauffolgende Vorvergoldung die Herstellung des sogenannten Kontakt-Vorgolds, d.h. einer Auflage, die sich durch eine extrem geringe Schichtdicke der Edelmetallbeschichtung auszeichnet, durch die der Bedarf an Edelmetall und damit die Kosten der Oberflächenbehandlung erheblich gesenkt werden können.

Durch die Verwendung von Brush-Plating (unter anderem auch in Kombination mit der Andruckkontakt-Vergoldung) ist es möglich, selektiv nur eine Seite, z.B. die dem Anoden- oder Kathodenraum zugewandte Seite der Polplatte und/oder des Zellrahmens zu vergolden, während die andere, also z.B. die dem Kühlkreislauf zugewandte Seite der Polplatte, frei von Beschichtung bleibt.

Beim Brush-plating wird dem zu beschichtenden Bauteil eine Maske aufgelegt, die die maskierten Stellen der Polplatte vor der Beschichtung schützt. Nach der erfolgten Kontaktbeschichtung wird die Maske dann wieder entfernt.

Bei einer weiteren Ausgestaltung des Verfahrens wird das Bauteil in einem kontinuierlichen und automatisierten Durchlaufverfahren beschichtet, so daß das Verfahren massenfertigungstauglich ist.

Beim Einsatz einer Ausgestaltung der Erfindung gelang es, einen Übergangswiderstand zwischen einer Polplatte und einem Stromkollektor von unter 3 mΩcm² (bei 16bar Anpressdruck) bzw. von 7mΩcm² (bei 4bar) zu erreichen.

Die Erfindung ermöglicht es, die Vorteile einer Edelmetallbeschichtung, die z.B. den Übergangswiderstand zwischen Polplatte und Stromkollektor einer Brennstoffzelle verringert, mit niedrigen Produktionskosten zu verbinden. Dies wird möglich, weil festgestellt wurde, daß auch mit einer minimalen, noch nicht einmal zusammenhängenden Edelmetallbeschichtung eine ausreichende und manchmal sogar verbesserte Reduzierung des Übergangswiderstands zwischen einem Bauteil und einem Kontaktelement erreicht wird. Die Beschichtung kann so dünn sein, daß sie unter Umständen mit bloßem Auge nicht zu erkennen ist.

## Patentansprüche

1. Brennstoffzelle mit wenigstens einem Bauteil aus korrosionsbeständigem Werkstoff, wie eine Polplatte und/oder ein Zellrahmen, **dadurch gekennzeichnet, daß** zur Reduzierung des Übergangswiderstandes auf zumindest einer Stelle und/oder Seite des Bauteils eine Edelmetall-Kontaktschicht vorhanden ist, wobei die gemittelte Dicke der Edelmetall-Kontaktschicht ≤ 0,1 µm beträgt und wobei die Metallbeschichtung diskrete Leitungspfade und/oder Leitungsinseln umfaßt.

2. Brennstoffzelle nach Anspruch 1, **dadurch gekennzeichnet, daß** die Edelmetall-Kontaktschicht eine Dicke von ≤ 0,05 µm, vorzugsweise ≤ 0,03 µm, insbesondere ≤ 0,02 µm hat.

3. Brennstoffzelle nach Anspruch 2, **dadurch gekennzeichnet, daß** die Schichtdicke im Nano-Bereich zwischen 1 bis 10 nm liegt.

4. Brennstoffzelle nach einem der Ansprüche 1 bis 3, **dadurch gekennzeichnet, daß** das Edelmetall Gold ist.

5. Verfahren zur Reduzierung des Übergangswiderstandes bei Bauteilen einer Brennstoffzelle, wie eine Polplatte und/oder ein Zellrahmen, durch Beschichten mit Edelmetall, wobei das Edelmetall mit einer Schichtdicke von maximal 0,1 um als diskrete Leitungspfade und/oder Leitungsinseln aufgetragen wird.

6. Verfahren nach Anspruch 5, bei dem die Herstellung der Edelmetallbeschichtung in einem kontinuierlichen Prozeßablauf eingebettet ist.

7. Verfahren nach einem der Ansprüche 4 oder 6, bei dem als Edelmetall Gold eingesetzt wird.

8. Verfahren nach einem der Ansprüche 5 bis 7, bei dem selektiv nur bestimmte Stellen und/oder Seiten des Bauteils beschichtet werden.

## Claims

1. Fuel cell having at least one component made from corrosion-resistant material, such as a terminal plate and/or a cell frame, **characterized in that** to reduce the contact resistance on at least one location and/or side of the component there is a precious-metal contact layer, the mean thickness of the precious-metal contact layer being ≤ 0.1 µm and the metal coating comprising discrete conduction paths and/or conduction islands.

2. Fuel cell according to Claim 1, **characterized in that** the precious-metal contact layer has a thickness of ≤ 0.05 µm, preferably ≤ 0.03 µm, in particular ≤ 0.02 µm.

3. Fuel cell according to Claim 2, **characterized in that** the layer thickness lies in the nano range between 1 and 10 nm.

4. Fuel cell according to one of Claims 1 to 3, **characterized in that** the precious metal is gold.

5. Method for reducing the contact resistance in components of a fuel cell, such as a terminal plate and/or a cell frame, by coating with precious metal, the precious metal being applied with a layer thickness of at most 0.1 µm as discrete conduction paths and/or conduction islands.

6. Method according to Claim 5, in which the production of the precious-metal coating is incorporated in a continuous process sequence.

7. Method according to one of Claims 4 and 6, in which the precious metal used is gold.

8. Method according to one of Claims 5 to 7, in which selectively only certain parts and/or sides of the component are coated.

## Revendications

1. Pile à combustible ayant au moins un élément en un matériau résistant à la corrosion, comme une plaque polaire et/ou un châssis de pile, **caractérisée en ce que** pour réduire la résistance de contact sur au moins un point et/ou une face de l'élément, il est présent une couche de contact en métal précieux, l'épaisseur moyenne de la couche de contact en métal précieux étant inférieure ou égale à 0,1 µm et le revêtement métallique comprenant des trajets conducteurs et/ou des îlots conducteur distincts.

2. Pile à combustible suivant la revendication 1, **caractérisée en ce que** la couche de contact en métal précieux a une épaisseur inférieure ou égale à 0,05 µm, de préférence inférieure ou égale à 0,03 µm, et notamment inférieure ou égale à 0,02 µm.

3. Pile à combustible suivant la revendication 2, **caractérisée en ce que** l'épaisseur de la couche est de l'ordre du nanomètre en étant comprise entre 1 et 10 nm.

4. Pile à combustible suivant l'une des revendications 1 à 3, **caractérisée en ce que** le métal précieux est l'or.

5. Procédé de réduction de la résistance de contact pour des éléments d'une pile à combustible comme une plaque polaire et/ou un châssis de filtre par application en revêtement d'un métal précieux, le métal précieux est déposé en une épaisseur de couche d'au maximum de 0,1 µm sous la forme de trajets de conduction et/ou d'îlots de conduction distincts.

6. Procédé suivant la revendication 5, dans lequel la production du revêtement en métal précieux est incorporée dans un déroulement continu des opérations.

7. Procédé suivant l'une des revendications 4 ou 6, dans lequel on utilise de l'or comme métal précieux.

8. Procédé suivant une des revendications 5 à 7, dans lequel on revêt sélectivement seulement certains points et/ou face de l'élément.
